# EUROPEAN PATENT APPLICATION

(11) **EP 2 367 227 A2**
(43) Date of publication of application: **21.09.2011**
(21) Application number: 10173454.9
(22) Date of filing: 19.08.2010
(51) Int. Cl.: H01M 8/02, H01M 8/10, H01M 8/24, H01M 4/86

(54) **A membrane electrode assembly for a fuel cell and a fuel cell stack incorporating the same**

(30) Priority: 17.03.2010 US 314895 P; 08.06.2010 US 796456
(71) Applicant: Samsung SDI Co., Ltd., Gyeonggi-do (KR)
(72) Inventor: Song, Kah-Young, Gyeonggi-do (KR); Kim, Hee-Tak, Gyeonggi-do (KR); Han, Sang-Il, Gyeonggi-do (KR); Kim, Tae-Yoon, Gyeonggi-do (KR)
(74) Representative: Grey, Ian Michael

(57) **Abstract**

A membrane electrode assembly for a fuel cell is disclosed. It comprises an electrolyte membrane, an anode facing one side of said electrolyte membrane and a cathode facing the other side of said electrolyte membrane. The anode and cathode each include a gas diffusion layer and the areal density of the gas diffusion layer of at least one of the anode or cathode varies in a direction across its surface. The invention also provides a fuel cell stack incorporating a plurality of membrane electrode assemblies according to the invention.

## Description

The present invention relates to a membrane electrode assembly (MEA) for a fuel cell and a fuel cell stack incorporating a plurality of membrane electrode assemblies according to the invention.

A fuel cell system includes a fuel cell stack generating electrical energy using electrochemical reaction of a fuel (hydrocarbon-based fuel, hydrogen, or rich hydrogen gas) and an oxidizing agent (air or oxygen), a fuel supply supplying a fuel to the fuel cell stack, and an oxidizing agent supply supplying an oxidizing agent to the fuel cell stack. The fuel cell stack includes a plurality of membrane electrode assemblies (MEAs) and a separator (also referred to as a bipolar plate) disposed between the MEAs.

Each MEA includes an electrolyte membrane, an anode formed at one side of the electrolyte membrane, and a cathode formed at the other side of the electrolyte membrane. The separator forms a fuel channel at one side facing the anode to supply a fuel to the anode therethrough, and forms an oxidizing agent channel at one side facing the cathode to supply the oxidizing agent to the cathode therethrough. Then, a hydrogen oxidation reaction in the anode and an oxygen reduction reaction in the cathode generate electrical energy, and heat and moisture are additionally generated.

During operation of the fuel cell stack, water is additionally generated in a specific area rather than being generated over the entire area of the MEA, and the amount of water is increased as the current density is increased. Thus, dispersion of an oxidizing agent is deteriorated in an area where a large amount of water is generated, and the MEA is deteriorated or electrochemical reaction does not occur in an area lacking water. Accordingly, uniform reaction cannot be induced over the entire area of the MEA, thereby causing performance deterioration of the fuel cell stack.

The present invention seeks to provide a membrane electrode assembly that can increase electrical energy generation efficiency by inducing uniform electrochemical reaction in the entire area of a membrane electrode assembly (MEA), and in a fuel cell stack having a plurality of membrane electrode assemblies.

It is known to provide a membrane electrode assembly for a fuel cell comprising an electrolyte membrane, an anode facing one side of said electrolyte membrane and a cathode facing the other side of said electrolyte membrane, the anode and cathode each including a gas diffusion layer.

A membrane electrode assembly according to the present invention is characterised in that the areal density of the gas diffusion layer of at least one of the anode or cathode varies in a direction across its surface.

In one embodiment, the areal density of the gas diffusion layer of the anode and/or the cathode may vary gradually. For example, the areal density of the gas diffusion layer may decrease from a first peripheral edge of the gas diffusion layer towards a second peripheral edge opposite to said first edge. Alternatively, the areal density of the gas diffusion layer initially decreases from a first peripheral edge of the gas diffusion layer and then increases in the same direction towards a second peripheral edge opposite to said first peripheral edge.

In another embodiment, the gas diffusion layer of the anode and/or cathode can have a plurality of regions and each region may have a different areal density. The areal density may also vary gradually within each region.

In an embodiment where the gas diffusion layer has a plurality of regions, at least some of those regions may be of different sizes.

In one particular embodiment, the gas diffusion layer may have three regions namely, first and second regions adjacent opposite peripheral edges of the gas diffusion layer and a third region located between said first and second regions, said third region having an areal density which is lower than the areal density of the first and second regions.

In any embodiment of the invention, the gas diffusion layer of the anode and/or the cathode preferably each comprise a backing layer and a micro-porous layer and the water permeability of the backing layer and/or of the micro-porous layer is altered to vary the areal density of said gas diffusion layer.

In some embodiments, the gas diffusion layer of the anode and/or the cathode may each comprise a backing layer and the areal density of the backing layer in one region is between 50g/m2 to 300g/m2 and the areal density of the backing layer in another region is between 10g/m2 to 50g/m2.

In other embodiments, the gas diffusion layer of the anode and/or the cathode each comprise a micro-porous layer and the areal density of the micro-porous layer in one region is between 30g/m2 to 100g/m2 and the areal density of the micro-porous layer in another region is equal to or less than 70g/m2.

Preferably, the backing layer and the micro-porous layers have pores and the size and/or number of said pores changes in a direction across the surface of said gas diffusion layer so as to alter the water permeability of said backing layer and micro-porous layer and thereby vary the areal density of said gas diffusion layer.

According to the invention, there is also provided a fuel cell stack including a plurality of membrane electrode assemblies according to the invention, the fuel cell stack including a separator disposed between adjacent membrane electrode assemblies.

Preferably, the separators comprise an oxidising agent channel facing the gas diffusion layer of the cathode, an oxidising agent inlet manifold to supply oxidising agent to said oxidising agent channel and, an oxidising agent outlet manifold for the flow of oxidising agent out of said oxidising agent channel, wherein the areal density of the gas diffusion layer of the cathode in an area neighbouring the oxidising agent inlet manifold is higher than the areal density of a region displaced from the oxidising agent inlet manifold. Most preferably, the areal density of the gas diffusion layer of the cathode is higher in an area neighbouring the oxidising agent outlet manifold relative to a region displaced from both the oxidising agent inlet and outlet manifolds.

In another embodiment, the separators comprise a fuel channel facing the gas diffusion layer of the anode, a fuel inlet manifold to supply fuel to said fuel channel and, a fuel outlet manifold for the flow of unreacted fuel out of the fuel channel, wherein the areal density of the gas diffusion layer of the anode in an area neighbouring the fuel inlet manifold is higher than the areal density of a region displaced from the fuel inlet manifold.

The areal density of the gas diffusion layer of the anode may also be higher in an area neighbouring the fuel outlet manifold relative to a region displaced from both the fuel inlet and outlet manifolds.

Embodiments of the invention will now be described, by way of example only, with reference to the accompanying drawings, in which:
FIG. 1 is a perspective view of a fuel cell stack according to a first exemplary embodiment of the present invention;
FIG. 2 is an exploded perspective view of one MEA and two separators of the fuel cell stack of FIG. 1;
FIG. 3 is a partial cross-sectional view of the MEA and the separators of FIG. 2;
FIG. 4 is a schematic diagram of a gas diffusion layer of the cathode of the fuel cell stack of FIG. 3;
FIG. 5 is a schematic diagram of a gas diffusion layer of the anode of the fuel cell stack of FIG. 3;
FIG. 6 is a schematic diagram of a gas diffusion layer of a cathode of a fuel cell stack according to a second exemplary embodiment of the present invention;
FIG. 7 is a schematic diagram of a gas diffusion layer of an anode of the fuel cell stack according to the second exemplary embodiment of the present invention;
FIG. 8 is a schematic diagram of a gas diffusion layer of a cathode of a fuel cell stack according to a third exemplary embodiment of the present invention;
FIG. 9 is a schematic diagram of a gas diffusion layer of an anode of the fuel cell stack according to the third exemplary embodiment of the present invention;
FIG. 10 is a schematic diagram of a gas diffusion layer of a cathode of a fuel cell stack according to a fourth exemplary embodiment of the present invention;
FIG. 11 is a schematic diagram of a diffusion gas layer of an anode of the fuel cell stack according to the fourth exemplary embodiment of the present invention;
FIG. 12 is a graph of results of the power density experiments of the MEAs of the exemplary embodiment and the comparative exemplary embodiment; and
FIG. 13 is a schematic diagram of the entire configuration of a fuel cell system incorporating a fuel cell stack having a plurality of membrane electrode assemblies according to an exemplary embodiment of the present invention.

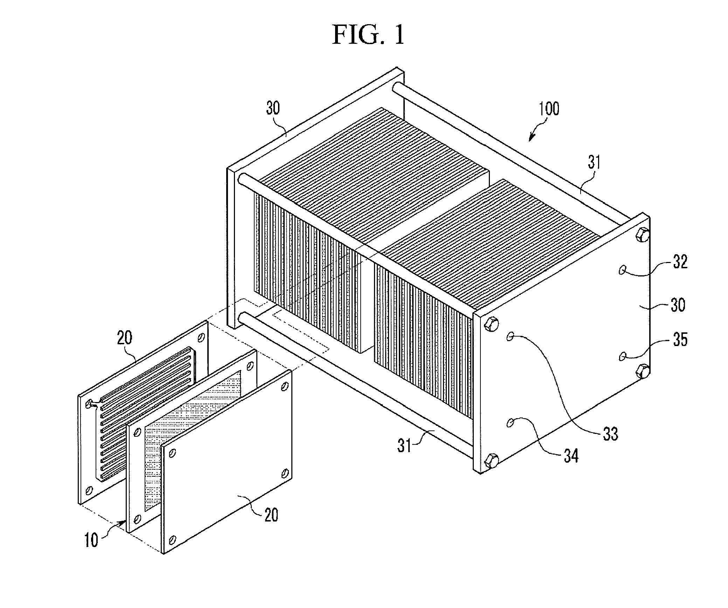

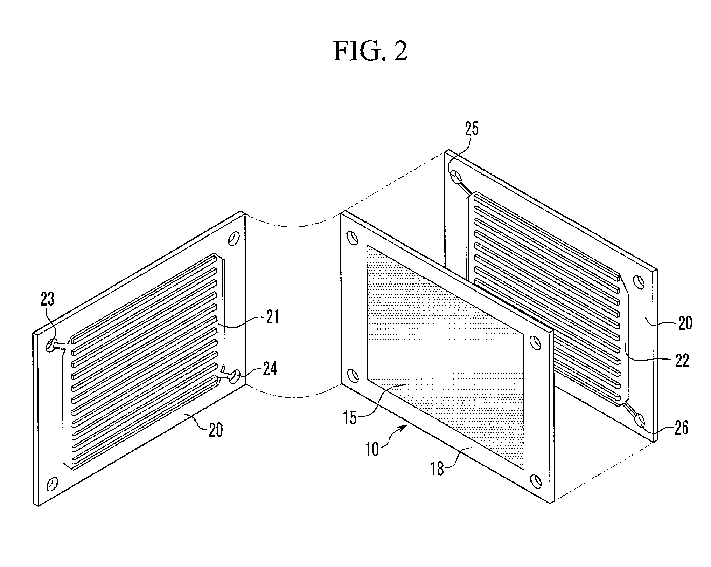

FIG. 1 is a perspective view of a fuel cell stack according to a first exemplary embodiment of the present invention, and FIG. 2 is an exploded perspective view of one MEA and two separators of the fuel cell stack of FIG. 1.

Referring to FIG. 1 and FIG. 2, a fuel cell stack 100 according to the first exemplary embodiment includes a plurality of membrane electrode assemblies (MEAs) 10 and a plurality of separators 20 disposed closely adjacent to the MEAs 10 between the MEAs 10. One MEA 10 and the two separators 20 disposed at both sides of the MEA 10 form one electric generation unit (i.e., unit cell) generating electrical energy.

The separator 20 is called a bipolar plate, and a pair of end plates 30 are disposed at the outmost edge of the fuel cell stack 100. The fuel cell stack 100 is firmly assembled by a fastening means such as a bolt 31 penetrating the two end plates 30. In one of the end plates 30, a fuel inlet 32 supplying a fuel, an oxidizing agent inlet 33 supplying an oxidizing agent, a fuel outlet 34 emitting an unreacted fuel, and an oxidizing agent outlet 35 emitting moisture and unreacted air are provided.

FIG. 1 illustrates two inlets 32 and 33 and two outlets 34 and 35 in one end plate 30, but the fuel inlet 32 and the oxidizing agent inlet 33 may be formed in one end plate 30 and the fuel outlet 34 and the oxidizing agent outlet 35 may be formed in the other end plate 30.

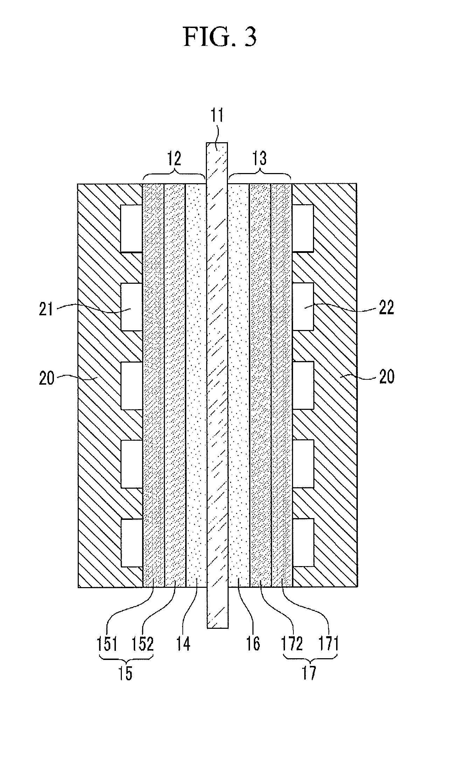

FIG. 3 is a partial cross-sectional view of the MEA and separators of FIG. 2.

Referring to FIG. 3, the MEA 10 includes an electrolyte membrane 11, a cathode 12 formed at one side of the electrolyte membrane 11, and an anode 13 formed at the other side of the electrolyte membrane 11.

The cathode 12 is supplied with the oxidizing agent, and includes a catalyst layer 14 transforming oxygen on the oxidizing agent into electrons and oxygen ions by a reduction reaction, and a gas diffusion layer 15 contacting the external surface of the catalyst layer 14 and smoothing movement of the electrons and oxygen ions. The anode 13 is supplied with the fuel, and includes a catalyst layer 16 transforming hydrogen in the fuel to electrons and hydrogen ions by an oxidation reaction, and a gas diffusion layer 17 contacting the external surface of the catalyst layer 16 and smoothing movement of the electrons and hydrogen ions.

The electrolyte membrane 11 may be a solid polymer electrolyte having a thickness of 5µm to 200µm, and the anode 13 has an ion exchange function for moving the hydrogen ions generated in the catalyst layer 16 to the catalyst layer 14 of the cathode 12. In FIG. 2, reference numeral 18 represents a supporting sheet that supports the MEA 10.

The separator 20 functions as a conductor that connects the cathode 12 of the MEA at one side and the anode 13 of the MEA 10 at the other side in series. In addition, the separator 20 forms an oxidizing agent channel 21 at a side facing the cathode 12 to supply the oxidizing agent to the cathode 12 therethrough, and forms a fuel channel 22 at a side facing the anode 13 to supply the fuel to the anode 13 therethrough.

Referring to FIG. 2 and FIG. 3, an oxidizing agent inlet manifold 23 and an oxidizing agent outlet manifold 24 are formed at corners of the separator 20 and are connected with the oxidizing agent channel 21. The oxidizing agent channel 21 has a concave groove connecting the oxidizing agent inlet manifold 23 and the oxidizing agent outlet manifold 24. At the other corners of the separator 20, a fuel inlet manifold 25 and a fuel outlet manifold 26 connected with the fuel channel 22 are formed. The fuel channel 22 has a concave groove connecting the fuel inlet manifold 25 and the fuel outlet manifold 26.

The oxidizing agent supplied through the oxidizing agent inlet 33 is dispersed to the oxidizing agent channels 21 of the respective separators 20 through the oxidizing agent inlet manifold 23 connected with the oxidizing agent inlet 33. Thus, the oxidizing agents are simultaneously supplied to the cathodes 12 of the MEAs 10. In addition, moisture and unreacted air passing through the oxidizing agent outlet manifold 24 in the opposite side are emitted through the oxidizing agent outlet 35.

The fuel supplied through the fuel inlet 32 is dispersed to the fuel channels 22 of the respective separators 20 through the fuel inlet manifold 25 connected with the fuel inlet 32. Thus, the fuel is simultaneously supplied to the anodes 13 of the respective MEAs 10. In addition, unreacted fuel passing through the fuel outlet manifold 26 at the opposite side is emitted through the fuel outlet 34.

When the fuel cell stack 100 with the above configuration generates electrical energy, water and heat are additionally generated. However, the water is generated in a specific area rather than being uniformly generated over the entire areas of the MEA 10, and therefore moisture dispersion in the MEA 10 becomes non-uniform. The non-uniform moisture dispersion causes deterioration of the fuel cell stack 100 and electrical energy generation efficiency.

In the fuel cell stack 100 of the present exemplary embodiment, the gas diffusion layers 15 and 17 are divided into at least two areas, and each has a different areal density in the at least two divided areas. The gas diffusion layers 15 and 17 minimize moisture loss in an area where moisture lacks and smooth moisture emission in a moisture-rich area to provide uniform moisture dispersion in the MEA 10.

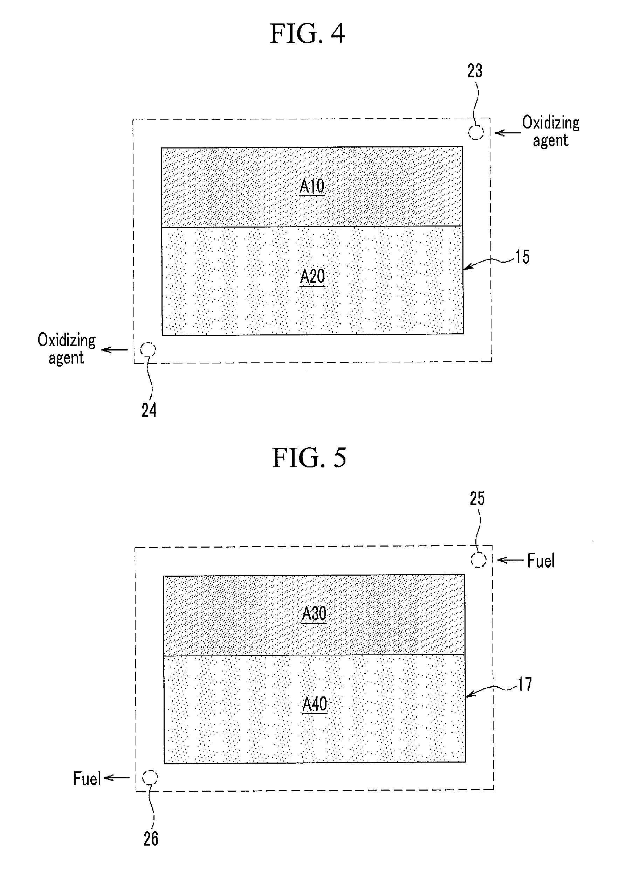

FIG. 4 shows a schematic diagram of the gas diffusion layer of the cathode of the fuel cell stack, and FIG. 5 shows a schematic diagram of the gas diffusion layer of the anode of the fuel cell stack of FIG. 3.

Referring to FIG. 3 to FIG. 5, the gas diffusion layer 15 of the cathode 12 is divided into a first area A10 neighboring the oxidizing agent inlet manifold 23 and a second area A20 neighboring the oxidizing agent outlet manifold 24. In addition, the areal density of the gas diffusion layer 15 measured in the first area A10 is higher than that of the gas diffusion layer 15 measured in the second area A20.

The gas diffusion layer 17 of the anode 13 is divided into a third area A30 neighboring the fuel inlet manifold 25 and a fourth area A40 neighboring the fuel outlet manifold 26. In addition, the areal density of the gas diffusion layer 7 measured in the third area A30 is higher than that of the gas diffusion layer 71 measured in the fourth area A40.

However, the locations of the oxidizing agent inlet manifold 23 and the oxidizing agent outlet manifold 24 are not limited to the locations shown in FIG. 4. The first area A10 of the gas diffusion layer 15 is defined to be an area neighboring the oxidizing agent inlet manifold 23 without regard to the location of the oxidizing agent inlet manifold 23. The locations of the fuel inlet manifold 25 and the fuel outlet manifold 26 are not limited to the locations shown in FIG. 5. The third area A30 of the gas diffusion layer 17 is defined to be an area neighboring the fuel inlet manifold 25 without regard to the location of the fuel inlet manifold 25.

The gas diffusion layers 15 and 17 may be effectively applied to the fuel cell stack 100 being rich in moisture at the peripheries of the oxidizing agent outlet manifold 24 and the fuel outlet manifold 26 and lacking moisture at the peripheries of the oxidizing agent inlet manifold 23 and the fuel inlet manifold 25 in the MEA 10 when the fuel cell stack 100 is driven.

The gas diffusion layers 15 and 17 are formed of layered structures of backing layers 151 and 171 and micro-porous layers 152 and 72 contacting the backing layers 151 and 171 in one side. The backing layers 151 and 171 are formed of a porous thin plate material such as a carbon paper, a carbon cloth, a carbon felt, a porous metal plate, and a porous metal matt, or are formed by layering two or more of the porous thin plate materials. The micro-porous layers 152 and 172 include at least one of carbon powder, carbon nano-rods, carbon nanowires, carbon nanotubes, a conductive metal, an inorganic material, and a ceramic powder.

A hydrophobic material such as polytetrafluoroethylene or a hydrophilic material such as a sulfonated tetrafluoroethylene copolymer(e.g., Nafion® ionomer) may be used for the surface treatment of the backing layers 151 and 171 and the micro-porous layers 152 and 172. The hydrophobic surface treatment can prevent a flooding phenomenon in the gas diffusion layers 15 and 17, and the hydrophilic surface treatment can increase moisture content in the MEA 10.

The gas diffusion layers 15 and 17 may be divided into the first area A10, the second area A20, the third area A30, and the fourth area A40 by controlling the areal density of the backing layers 151 and 171 or the areal density of the micro-porous layers 152 and 172, or by controlling the areal density of the backing layers 151 and 171 and the micro-porous layers 152 and 172 together. The backing layers 151 and 171 and the micro-porous layers 152 and 172 have predetermined pores, and the water permeability of the backing layers 151 and 171 and the micro-porous layers 151 and 172 is changed in accordance with the areal density, respectively.

The gas diffusion layers 15 and 17 decrease the water permeability of the first and third areas A10 and A30 where moisture lacks with the high areal density, and increases the water permeability in the second and fourth areas A20 and A40 where moisture is rich with the low areal density. Therefore, the gas diffusion layers 15 5 and 17 lock the moisture in the first and third areas A10 and A30 to minimize moisture loss, and increase the emission of the moisture in the second and fourth areas A20 and A40.

In further detail, the gas diffusion layer 15 of the cathode 12 transmits moisture generated in the catalyst layer 14 to the electrolyte membrane 11 and the oxidizing agent channel 21 of the separator 20. In the first area A10, the gas diffusing layer 15 decreases the movement of the moisture towards the oxidizing agent channel 21 with the high areal density, therefore the moisture mainly moves to the electrolyte membrane 11. In the second area A20, the gas diffusing layer 15 increases the movement of the moisture towards the oxidizing agent channel 21 with the low areal density, therefore the emission of the moisture can increase and the flooding phenomenon can be prevented.

In addition, the gas diffusion layer 17 of the anode 13 transmits the moisture generated in the catalyst layer 16 to the fuel channel 22 of the separator 20. In the third area A30, the gas diffusing layer 17 decreases the movement of the moisture towards the fuel channel 22 with the high areal density, therefore the moisture mainly moves to the electrolyte membrane 11. In the fourth area A40, the gas diffusing layer 17 increases the movement of the moisture towards the fuel channel 22 with the low areal density, therefore the emission of the moisture can increase and the flooding phenomenon can be prevented.

Thus, the moisture dispersion of the MEA 10 can be uniform in the entire area by the gas diffusion layers 15 and 17. Accordingly, the oxidizing agent can be uniformly dispersed over the entire area of the cathode 12, deterioration of the MEA 10 due to moisture lack can be prevented, and electrical energy production efficiency can be increased by inducing uniform electrochemical reaction over the entire area of the MEA 10.

The backing layers 151 and 171 of the gas diffusion layers 15 and 17 may have the areal density of 50g/m² to 300g/m² in the first and the third areas A10 and A30, and 10g/m² to 50g/m² in the second and the fourth areas A20 and A40. The micro-porous layers 152 and 72 of the gas diffusion layers 15 and 17 may have the areal density of 30g/m² to 100g/m² in the first and the third areas A10 and A30, and 70g/m² or under in the second and the fourth areas A20 and A40.

In this exemplary embodiment, the gas diffusion layers 15 and 17 of the cathode 12 and the anode 13 are both divided into two areas, however one of the gas diffusion layers 15 and 17 of the cathode 12 and the anode 13 may be divided into two areas.

In FIG. 4 and FIG. 5, the second area A20 is larger than the first area A10 and the fourth area A40 is larger than the area A30, but the areas of the gas diffusion layers 15 and 17 may be variously modified. That is, the first and second areas A10 and A20 may be set to be the same size or different size, and the third and fourth areas A30 and A40 may be set to be the same size or different size.

In addition, in FIG. 4 and FIG. 5, the gas diffusion layers 15 and 17 are respectively divided into two areas, but at least one addition area may be formed between the first and second areas A10 and A20 and between the third and fourth areas A30 and A40. The areal density measured in the additional areas of the gas diffusion layers 15 and 17 is higher than the areal density measured in the second and fourth areas A20 and A40 of the gas diffusion layers 15 and 17, and is lower than the areal density measured in the first and third areas A10 and A30 of the gas diffusion layers 15 and 17.

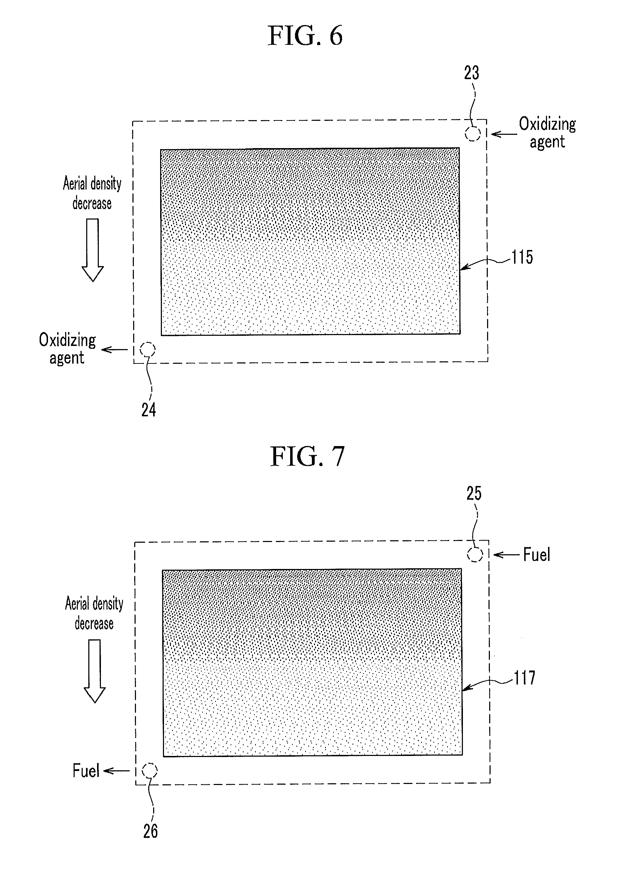

FIG. 6 shows a schematic diagram of a gas diffusion layer of a cathode of a fuel cell stack according to a second exemplary embodiment of the present invention, and FIG. 7 shows a schematic diagram of a gas diffusion layer of an anode of the fuel cell stack according to the second exemplary embodiment of the present invention.

Referring to FIG. 6 and FIG. 7, a gas diffusion layer 115 of a cathode 12 has areal density that is gradually decreased along at least one direction toward an oxidizing agent outlet manifold 24 from an oxidizing agent inlet manifold 23. A gas diffusion layer 117 of an anode 13 has areal density that is gradually decreased along at least one direction toward a fuel outlet manifold 26 from a fuel inlet manifold 25.

The gas diffusion layers 115 and 117 may respectively have a rectangular shape having a pair of long sides and a pair of short sides, and the areal density of the gas diffusion layers 115 and 117 may be gradually changed along one of a direction parallel with the long side, a direction parallel with the short side, and a diagonal direction. FIG. 6 and FIG. 7 illustrate that the areal density of the gas diffusion layers 115 and 117 changes along the direction parallel with the short side, but this is not restrictive.

The areal density variation of the gas diffusion layers 115 and 117 may be realized by controlling the areal density of backing layers 151 and 171 or the areal density of micro-porous layers 152 and 172, or by controlling the areal density of both the backing layers 151 and 171 and the micro-porous layers 152 and 172. In the fuel cell stack according to the second exemplary embodiment, the areal density is controlled by subdividing the gas diffusion layers 115 and 117 and accordingly moisture dispersion in the entire area of an MEA 10 can be further uniform.

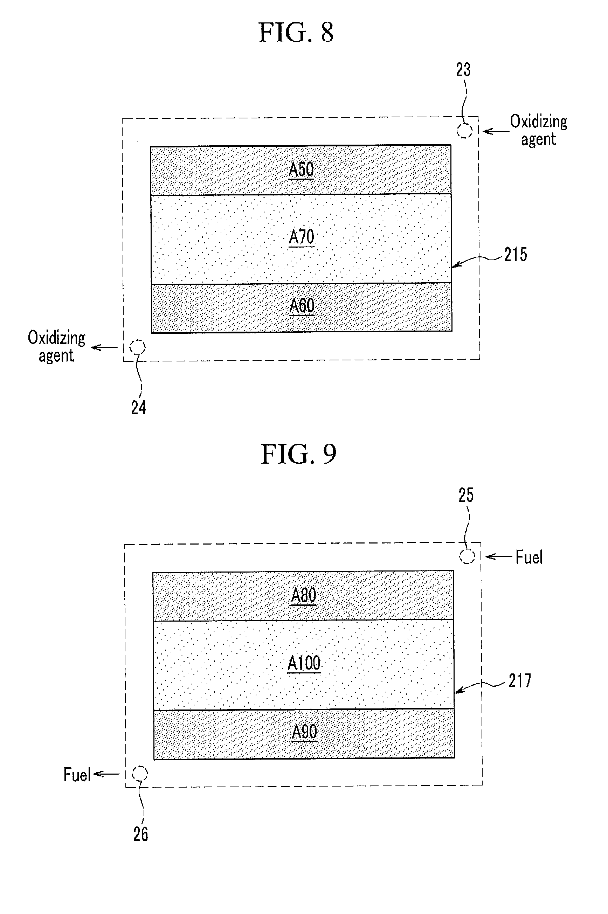

FIG. 8 shows a schematic diagram of a cathode of a fuel cell stack according to a third exemplary embodiment of the present invention, and FIG. 9 shows a schematic diagram of a gas diffusion layer of an anode of a fuel cell stack according to a third exemplary embodiment of the present invention.

Referring to FIG. 8 and FIG. 9, a gas diffusion layer 215 of a cathode 12 is divided into a fifth area A50 neighboring an oxidizing agent inlet manifold 23, a sixth area A60 neighboring an oxidizing agent outlet manifold 24, and a seventh area A70 disposed between the fifth and sixth areas A50 and A60. In addition, the areal density of the gas diffusion layer 215 measured in the fifth and sixth areas A50 and A60 is higher than that of the gas diffusion layer 215 measured in the seventh area A70. The areal density of the gas diffusion layer 215 measured in the fifth area A50 may be the same as that of the gas diffusion layer 215 measured in the sixth area A60.

A gas diffusion layer 217 of an anode 13 is divided into an eighth area A80 neighboring a fuel inlet manifold 25, a ninth area A90 neighboring a fuel outlet manifold 26, and a tenth area A100 disposed between the eighth and ninth areas A80 and A90. In addition, the areal density of the gas diffusion layer 217 measured in the eighth area A80 and the ninth area A90 is higher than that of the gas diffusion layer 217 measured in the tenth area A100. The areal density of the gas diffusion layer 217 measured in the eighth area A80 may be the same as that of the gas diffusion layer 217 measured in the ninth area A90.

The gas diffusion layers 215 and 217 may be effectively applied to a fuel cell stack being rich in moisture at the center area of the MEA 10 and lacking moisture at the peripheries of the oxidizing agent inlet manifold 23, the oxidizing agent outlet manifold 24, the fuel inlet manifold 25, and the fuel outlet manifold 26 when the fuel cell stack is driven.

The areal density variation of the gas diffusion layers 215 and 217 may be realized by controlling the areal density of backing layers 151 and 171 or controlling the areal density of micro-porous layers 152 and 172, or by controlling the areal density of the backing layers 151 and 171 and the micro-porous layers 152 and 172 together.

The gas diffusion layers 215 and 217 minimize moisture loss by locking moisture in the relatively dry fifth, sixth, eight, and ninth areas A50, A60, A80, and A90, and increase the emitting moisture in the seventh and tenth areas A70 and A100 where a large amount of moisture is generated. Thus, the gas diffusion layers 215 and 217 can provide uniform moisture dispersion over the entire area of the MEA 10.

The fifth area A50 to the tenth area A100 may vary in size rather than being limited to the size shown in FIG. 8 and FIG. 9. In addition, at least one additional area may be disposed between the fifth and seventh areas A50 and A70, between the sixth and seventh areas A60 and A70, between the eight and tenth areas A80 and A100, and between the ninth and tenth areas A90 and A100. The areal density of the gas diffusion layers 215 and 217 may be a middle value between two areal densities respectively measured in two neighboring areas.

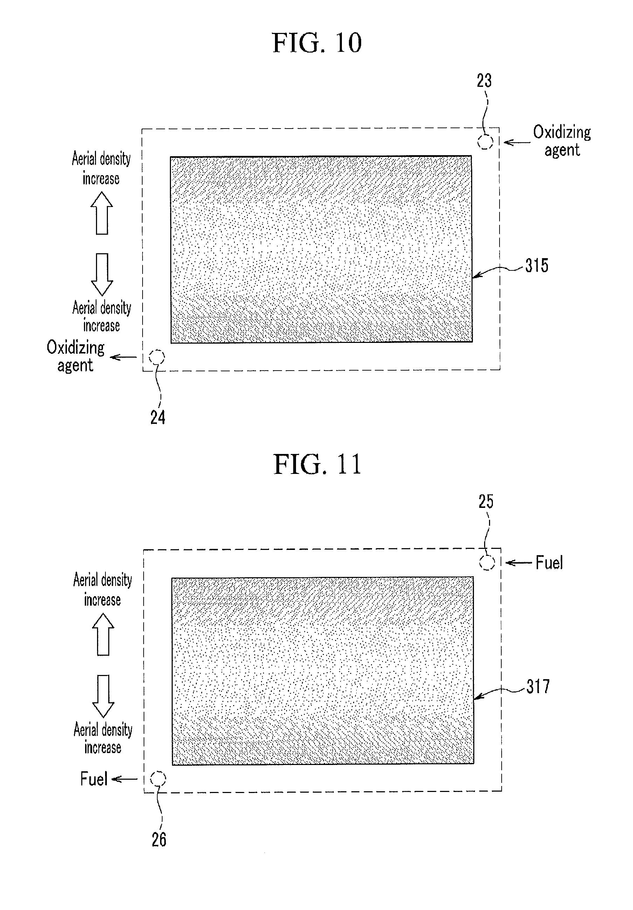

FIG. 10 shows a schematic diagram of a gas diffusion layer of a cathode of a fuel cell stack according to a fourth exemplary embodiment of the present invention, and FIG. 11 shows a schematic diagram of a gas diffusion layer of an anode of the fuel cell stack according the fourth exemplary embodiment of the present invention.

Referring to FIG. 10 and FIG. 11, a gas diffusion layer 315 of a cathode 12 has areal density that is gradually decreased along at least one direction toward an oxidizing agent outlet manifold 24 from an oxidizing agent inlet manifold 23 and then is gradually increased. A gas diffusion layer 317 of an anode 13 has areal density that is gradually decreased along at least one direction toward a fuel outlet manifold 26 from a fuel inlet manifold 25 and then is gradually increased.

The areal density of the gas diffusion layers 315 and 317 may be gradually changed along one of a direction parallel with a long side, a direction parallel with a short direction, and a diagonal direction. In FIG. 10 and FIG. 11, the areal density of the gas diffusion layers 315 and 317 are changed along the direction parallel with the short side, but this is not restrictive.

In the second exemplary embodiment to the fourth exemplary embodiment, one of the gas diffusion layers 15 and 17 of the cathode 12 and the anode 13 may be formed to have uniform areal density without a division of areas and a gradual change of the areal density. That is, the division of areas and the gradual change of the areal density may be applied to one of the gas diffusion layers 15 and 17 of the cathode 12 and the anode 13.

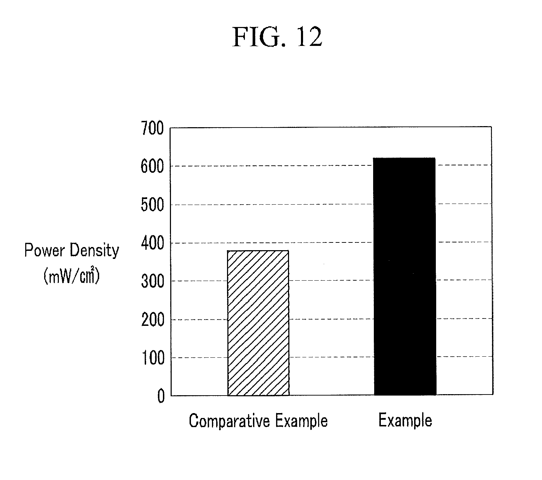

Fig. 12 shows a graph of the results of the power density experiments of the MEAs of an exemplary embodiment and a comparative exemplary embodiment.

In the MEA of the exemplary embodiment, the gas diffusion layer 12 of the cathode is divided into the first area A10 and the second area A20 (refer to Fig. 4), and the first and second areas A10 and A20 have the areal density of 174g/m² and 115g/m², respectively. In the fuel cell stack of the comparative exemplary embodiment, a gas diffusion layer of a cathode has uniform areal density of 115g/m². The areal density represents sum of an areal densities of a backing layer and a micro-porous layer.

The MEA of the comparative exemplary embodiment have the same configuration of the MEA of the exemplary embodiment except the gas diffusion layer of the cathode. The power density experiment is performed while supplying a dry oxidizing agent to the cathode. Referring to Fig. 12, the power density of the MEA of the exemplary embodiment is 1.58 times as high as that of the comparative exemplary embodiment.

The areal density variation of the gas diffusion layers 315 and 317 can be realized by controlling the areal density of backing layers 151 and 171 or controlling the areal density of micro-porous layers 152 and 172, or by controlling the areal density of the backing layers 151 and 171 and the areal density of the micro-porous layers 152 and 172 together. The fuel cell stack according to the fourth exemplary embodiment controls the areal density by further subdividing the gas diffusion layers 315 and 317, and accordingly moisture dispersion over the entire areas of an MEA 10 can be more effectively uniform.

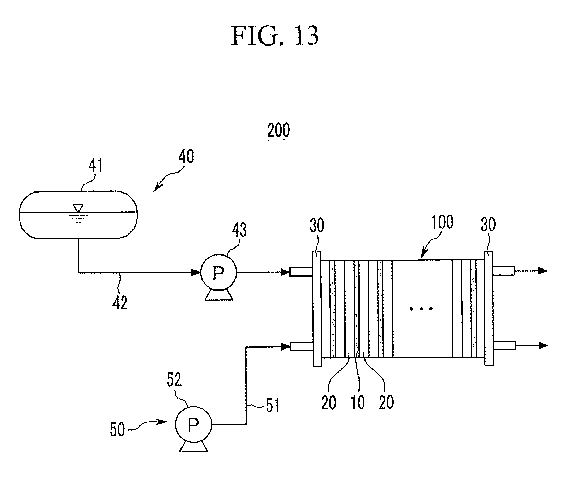

FIG. 13 shows a schematic diagram of the entire configuration of a fuel cell system incorporating a fuel cell stack having a plurality of membrane electrode assemblies according to an exemplary embodiment of the present invention.

Referring to FIG. 13, a fuel cell system 200 includes a fuel cell stack 100, a fuel supply 40 supplying a fuel to the fuel cell stack 100, and an oxidizing agent supply 50 supplying an oxidizing agent to the fuel cell stack 100.

The fuel is a hydrocarbon-based fuel existing in a liquid or gas state such as methanol, ethanol, liquefied natural gas, gasoline, and butane gas, and the oxidizing agent is external air or oxygen gas.

The fuel supply 40 includes a fuel tank 41 storing the liquid or gas fuel, a fuel supply pipe 42 connecting the fuel tank 41 and the fuel cell stack 100, and a fuel pump 43 connected with the fuel tank 41. The fuel pump 43 emits the fuel stored in the fuel tank 41 with a predetermined pumping force to supply the fuel to the fuel cell stack 100 through the fuel supply pipe 42.

The oxidizing agent supply 50 includes an oxidizing agent supply pipe 51 connected with the fuel cell stack 100 and an oxidizing agent pump 52 installed in the oxidizing agent supply pipe 51. The oxidizing agent pump 52 inhales external air with a predetermined pumping force to supply an oxidizing agent to the fuel cell stack 100 through the oxidizing agent supply pipe 51. In this case, a control valve (not shown) may be installed in the oxidizing agent supply unit 51 to control the supply of the oxidizing agent.

The fuel cell system 200 is a direct oxidation type that generates electrical energy directly using electrochemical reaction of the fuel and the oxidizing agent. However, the fuel cell system 200 of the present exemplary embodiment is not limited to the direct oxidation type. That is, the fuel cell system 200 may be a polymer electrode membrane type that generates electrical energy using electrochemical reaction of hydrogen or a hydrogen-rich gas and a gas.

A fuel supply of the polymer electrode membrane type of fuel cell system further includes a reformer that generates hydrogen or a hydrogen-rich gas by reforming a fuel.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A membrane electrode assembly for a fuel cell comprising an electrolyte membrane, an anode facing one side of said electrolyte membrane and a cathode facing the other side of said electrolyte membrane, the anode and cathode each including a gas diffusion layer, **characterised in that** the areal density of the gas diffusion layer of at least one of the anode or cathode varies in a direction across its surface.

2. A membrane electrode assembly according to claim 1, wherein the areal density of the gas diffusion layer of the anode and/or the cathode varies gradually.

3. A membrane electrode assembly according to claim 2, wherein the areal density of the gas diffusion layer decreases from a first peripheral edge of the gas diffusion layer towards a second peripheral edge opposite to said first edge.

4. A membrane electrode assembly according to claim 2, wherein the areal density of the gas diffusion layer initially decreases from a first peripheral edge of the gas diffusion layer and then increases in the same direction towards a second peripheral edge opposite to said first peripheral edge.

5. A membrane electrode assembly according to claim 1, wherein the gas diffusion layer of the anode and/or cathode has a plurality of regions, each region having a different areal density.

6. A membrane electrode assembly according to claim 5, wherein at least some of the regions are of different sizes.

7. A membrane electrode assembly according to claim 5 or 6, wherein the gas diffusion layer has a three regions namely, first and second regions adjacent opposite peripheral edges of the gas diffusion layer and a third region located between said first and second regions, said third region having an areal density which is lower than the areal density of the first and second regions.

8. A membrane electrode assembly according to any preceding claim, wherein the gas diffusion layer of the anode and/or the cathode each comprise a backing layer and a micro-porous layer and the water permeability of the backing layer and/or of the micro-porous layer is altered to vary the areal density of said gas diffusion layer.

9. A membrane electrode assembly according to any of claims 5 to 7, wherein the gas diffusion layer of the anode and/or the cathode each comprise a backing layer and the areal density of the backing layer in one region is between 50g/m2 to 300g/m2 and the areal density of the backing layer in another region is between 10g/m2 to 50g/m2.

10. A membrane electrode assembly according to any of claims 5 to 7, wherein the gas diffusion layer of the anode and/or the cathode each comprise a micro-porous layer and the areal density of the micro-porous layer in one region is between 30g/m2 to 100g/m2 and the areal density of the micro-porous layer in another region is equal to or less than 70g/m2.

11. A membrane electrode assembly according to any of claims 8 to 10, wherein the backing layer and the micro-porous layers have pores and the size and/or number of said pores changes in a direction across the surface of said gas diffusion layer so as to alter the water permeability of said backing layer and micro-porous layer and thereby vary the areal density of said gas diffusion layer.

12. A fuel cell stack including a plurality of membrane electrode assemblies according to any preceding claim, the fuel cell stack including a separator disposed between adjacent membrane electrode assemblies.

13. A fuel cell stack according to claim 12, wherein the separators comprise an oxidising agent channel facing the gas diffusion layer of the cathode, an oxidising agent inlet manifold to supply oxidising agent to said oxidising agent channel and, an oxidising agent outlet manifold for the flow of oxidising agent out of said oxidising agent channel, wherein the areal density of the gas diffusion layer of the cathode in an area neighbouring the oxidising agent inlet manifold is higher than the areal density of a region displaced from the oxidising agent inlet manifold.

14. A fuel cell stack according to claim 13, wherein the areal density of the gas diffusion layer of the cathode is higher in an area neighbouring the oxidising agent outlet manifold relative to a region displaced from both the oxidising agent inlet and outlet manifolds.

15. A fuel cell stack according to any of claims 12 to 14, wherein the separators comprise a fuel channel facing the gas diffusion layer of the anode, a fuel inlet manifold to supply fuel to said fuel channel and, a fuel outlet manifold for the flow of unreacted fuel out of the fuel channel, wherein the areal density of the gas diffusion layer of the anode in an area neighbouring the fuel inlet manifold is higher than the areal density of a region displaced from the fuel inlet manifold.

16. A fuel cell stack according to claim 15, wherein the areal density of the gas diffusion layer of the anode is also higher in an area neighbouring the fuel outlet manifold relative to a region displaced from both the fuel inlet and outlet manifolds.
